# EUROPÄISCHE PATENTSCHRIFT

(11) **EP 0 337 416 B1**
(45) Veröffentlichungstag und Bekanntmachung des Hinweises auf die Patenterteilung: **14.07.1993**
(21) Anmeldenummer: 89106475.0
(22) Anmeldetag: 12.04.1989
(51) Int. Cl.: G02B 7/00, G02B 23/16, H04N 5/64

(54) **Kühlbares Sondengehäuse, insbesondere für eine Feuerraumsonde**
Vessel with cooling installation, in particular for detectors in combustion chamber
Boîte comportant un dispositif de refroidissement, en particulier pour le détecteur dans des chambres de combustion

(30) Priorität: 15.04.1988 DE 3812543
(43) Veröffentlichungstag der Anmeldung: 18.10.1989
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Sebald, Richard c/o GRUNDIG E.M.V., D-8510 Fürth/Bay. (DE)
(74) Vertreter: Dreykorn-Lindner, Werner, Dipl.-Ing.

(56) Entgegenhaltungen:
- DE-A- 1 031 992
- DE-A- 1 220 632
- DE-A- 3 436 651
- GB-A- 1 246 416
- US-A- 3 310 356

## Beschreibung

Die Erfindung betrifft ein gekühltes Sondengehäuse mit den Merkmalen gemäß dem Oberbegriff des Patentanspruchs 1.

Zur Fernbeobachtung in Feuerräumen oder bei industriellen Produktionsverfahren, bei denen besonders hohe Temperaturen auftreten, werden zum Schutz von Fernsehkamera und Kameraobjektiv vor hohen Temeraturen, diese in einem wasser- und/oder luftgekühlten Sondengehäuse untergebracht.

Aus der DE-PS 1 220 632 ist ein Periskop mit Vorderpupille und auf die Kühlumhüllung aufgesetztem, optischem Element bekannt, bei dem ein Verschlußorgan aus gut wärmeleitendem Material in Berührung mit der Wandung einer Kühlhülse steht. In den beiden zylindrischen Hohlräumen der Kühlhülse läuft eine Kühlflüssigkeit um und zur zusätzlichen Kühlung des Kameraobjektivs wird durch den Hohlraum zwischen Objektiv und Kühlhülse Luft hindurchgeblasen, welche durch eine Öffnung im Verschlußorgan ausströmt. Das Verschlußorgan wird sowohl durch die Luft als auch, infolge der Wärmeleitfähigkeit, durch die Kühlhülse gekühlt. Bei hohen Temperaturen ist diese kombinierte Kühlung des Verschlußorgans nicht ausreichend, so daß in der Praxis ein Durchbrennen des Verschlußorgans zu beobachten ist. Durch Verringerung des Durchmessers des Verschlußorgans und Verlängerung der Kühlhülse nach vorne kann zwar eine bessere Kühlung des kleineren Verschlußorgans erzielt werden, jedoch ist damit der Nachteil verbunden, daß nunmehr der verlängerte Teil der Kühlhülse den höheren Temperaturen ausgesetzt ist. In den Hohlräumen der Kühlhülse können Luft- oder Dampfblasen auftreten, welche sich festsetzen und dadurch zum Durchbrennen der Kühlhülse führen. Dieses Festsetzen ist häufig im Bereich des Übergangs von dem einen zylindrischen Hohlraum in den anderen zylindrischen Hohlraum zu beobachten, wobei dieser Übergangsbereich gerade den höchsten Temperaturen ausgesetzt ist.

Aus der DE-PS 1 031 992 ist ein gekühltes Endoskop bekannt, bei dem das zugeführte Kühlmittel in einer spiralförmigen Bewegung durch den Hohlraum zwischen Endoskop und Mantel nach vorne strömt und durch Bohrungen im Mantel austritt. Dadurch wird zwar eine intensive Kühlung des Mantels selbst erreicht, von Nachteil ist jedoch das Einströmen überhitzten Dampfes in den zu beobachtenden Raum. Dieses gekühlte Endoskop kann nur dann eingesetzt werden, wenn der ausströmende Dampf nicht zu unerwünschten chemischen Reaktionen, insbesondere Verpuffungen, führt.

Aus der DE-OS 34 36 651 ist eine Fernsehkamera zur Beobachtung von Feuerräumen bekannt, bei der sich in einem doppelwandigen, eine Ausblicköffnung aufweisenden Gehäuse ein Kühlmittel befindet und bei der an der inneren Wand des Gehäuses entlang zur Ausblicköffnung Druckluft strömt. Das doppelwandige Gehäuse ist derartig ausgestaltet, daß das durch eine Kammer im Hohlzylinder zufließende Kühlmittel im Bereich der Sondenspitze in einen Hohlraum wesentlich größerer Querschnittfläche umgelenkt wird und durch die andere Kammer im Hohlzylinder wieder abfließt. Das Durchbrennen des Sondengehäuses trat in der Praxis nach wie vor auf, wobei als mögliche Ursache hierfür sich im Kühlmitteldurchfluß festsetzende Luft- oder Dampfblasen angesehen werden.

Der Erfindung liegt die Aufgabe zugrunde, ein Sondengehäuse derartig auszugestalten, daß im Bereich der Sondenspitze das Festsetzen von Luft- oder Dampfblasen zuverlässig vermieden wird.

Diese Aufgabe wird erfindungsgemäß durch ein gekühltes Sondengehäuse mit den Merkmalen des Patentanspruchs 1 gelöst.

Die Kammern des Hohlkörpers stehen beim erfindungsgemäßen Sondengehäuse derartig mit Hohlräumen im Verschlußkörper in Verbindung, daß über den Verschlußkörper hinweg ein zwangsgeführter Kühlmittelkreislauf entsteht. Dadurch werden alle Bereiche des Sondengehäuses vollständig gekühlt, so daß ein Durchbrennen des Sondengehäuses zuverlässig vermieden wird. Die Ausführungsformen des Sondengehäuses gemäß Patentanspruch 2 und 3 sind fertigungstechnisch mit geringem Aufwand herstellbar und erlauben zudem eine beliebige Einbaulage des Sondengehäuses ohne Verringerung der Kühlwirkung.

Die Ausführungsform des Sondengehäuses gemäß Patentanspruch 4 weist den Vorteil auf, daß durch die erneute Zuführung des Kühlmittels die verbrauchte Kühlmittelmenge relativ gering ist.

Gemäß der Ausführungsform des Sondengehäuses nach Patentanspruch 5 wird im Verschlußkörper eine Aufteilung auf mehrere Kühlmittelströme mit insgesamt verringertem Strömungsquerschnitt vorgenommen. So kann auf einfache Art und Weise die Strömungsgeschwindigkeit des Kühlmittels erhöht und das Ablagern von im Kühlmittel enthaltenen Partikeln vermieden werden.

Die Erfindung wird im folgenden anhand einer in der Zeichnung dargestellten Ausführungsform näher beschrieben und erläutert. Es zeigt:
Fig. 1 eine Ausführungsform des Sondengehäuses in Schnittdarstellung gemäß der Erfindung und
Fig. 2 eine Draufsicht auf den Verschlußkörper ohne Deckplatte.

Die Erfindung wird im folgenden anhand einer Ausführungsform mit gerader Ausblickrichtung erläutert, sie kann jedoch auch durch entsprechende Ausgestaltung des Hohlkörpers HK bei Kameras mit seitlicher Ausblickrichtung eingesetzt werden. Die für das Verständnis der Erfindung nicht erforderlichen Teile, wie Kamera, Kameraobjektiv usw., sind in der Zeichnung nicht dargestellt bzw. nur angedeutet.

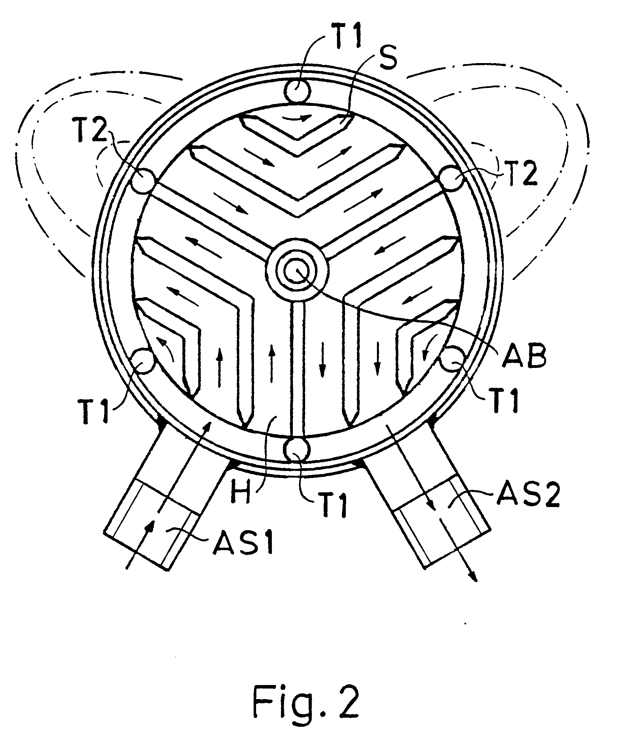

Das gekühlte Sondengehäuse umschließt die Kamera und das Kameraobjektiv und besteht aus einem Hohlkörper HK und einem Verschlußkörper VK mit einer Ausblicköffnung AB. Der Hohlkörper HK ist vorzugsweise ein doppelwandiges Rohr, in dessen Längsrichtung mittels Trennwänden T1, T2 Kammern K (vgl. Fig. 2) ausgebildet sind.

Der Verschlußkörper VK besteht aus einer Bodenplatte BP, einer Deckplatte DP und zwischen diesen liegenden Stegen S. Die dadurch im Verschlußkörper VK ausgebildeten Hohlräume H stehen mit den Kammern K des Hohlkörpers HK derartig in Verbindung, daß über den Verschlußkörper VK hinweg ein zwangsgeführter Kühlmittelkreislauf entsteht. Durch diese Zwangsführung wird erreicht, daß in den Kühlmitteldurchfluß eingebrachte Luftblasen oder infolge der hohen Temperaturen auftretende Dampfblasen sich im Verschlußkörper VK nicht festsetzen können, sondern durch das nachströmende Kühlmittel über den Verschlußkörper VK hinweggedrückt werden und durch die Kammern K entweichen.

Neben dieser Flüssigkeitskühlung kann auch eine Kühlung des Zwischenraumes zwischen Hohlkörper HK und Kamera bzw. Kamerobjektiv mittels Kühlluft oder einem anderen Gas vorgenommen werden, welches durch die Ausblicköffnung AB in den Beobachtungsraum geblasen wird.

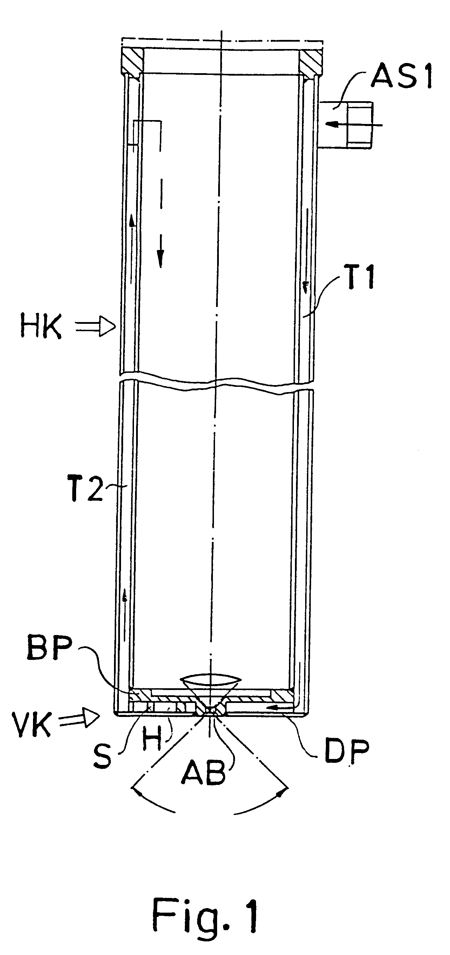

Durch die Pfeile in Fig. 1 ist die Strömungsrichtung des Kühlmittels angedeutet. Das über den Anschlußstutzen AS1 zugeführte Kühlmittel strömt durch eine der Kammern K des Hohlkörpers HK zur Sondenspitze und gelangt durch einen der Hohlräume H im Verschlußkörper VK in eine weitere Kammer K des Hohlkörpers HK und fließt durch diese wieder zurück, um dann erneut über eine weitere Kammer K des Hohlkörpers HK in Richtung des Verschlußkörpers VK zu fließen.

Fig. 2 zeigt eine Draufsicht des Verschlußkörpers VK, wobei die Deckplatte DP entfernt wurde. Durch die Pfeile ist die Strömungsrichtung des Kühlmittels im Sondengehäuse angedeutet. Die Flüssigkeitsströme durch die Kammern K des Hohlkörpers HK werden über die Hohlräume H im Verschlußkörper VK miteinander verkettet. Das über den Anschlußstutzen AS1 zugeführte Kühlmittel strömt durch die von den langen Trennwänden T1 begrenzte Kammer K zum Verschlußkörper VK und wird dort mittels der Stege S auf mehrere Kühlmittelströme im Verschlußkörper VK aufgeteilt. Die Stege S verlaufen gradlinig oder gekrümmt, wobei in Fig. 2 eine Ausführungsform der Stege S in Form gradlinig verlaufender und eine V-förmige Ecke ausbildender Stege S dargestellt ist. Bei der in Fig. 2 dargestellten Ausführungsform teilt sich der zufließende Kühlmittelstrom auf drei Kühlmittelströme auf und fließt durch eine von einer langen Trennwand T1 und einer kurzen Trennwand T2 begrenzte Kammer K wieder zurück, um erneut über eine von der kurzen Trennwand T2 und einer langen Trennwand T1 begrenzte Kammer K wieder zum Verschlußkörper VK zu fließen. Die Verkettung der durch die Kammern K fließenden Kühlmittelströme ist in Fig. 2 durch die strichpunktierten Linien angedeutet.

Das erfindungsgemäße Sondengehäuse erfordert einen relativ geringen Aufwand und vermeidet zuverlässig das Durchbrennen des Sondengehäuses, wobei die Kühlmittelmenge zur Erzielung einer ausreichenden Kühlwirkung wesentlich verringert werden konnte.

## Patentansprüche

1. Kühlbares Sondengehäuse zum Schützen einer Kamera vor hohen Temperaturen mit
* einem Hohlkörper (HK) zur Aufnahme der Kamera, der Kühlmittelkammern (K) und einen Anschlußstutzen (AS1) zum Zuführen des Kühlmittels zu einer der Kammern und einen Anschlußstutzen (AS2) zum Abführen des Kühlmittels aus einer anderen der Kammern aufweist, und der weiterhin auf einer Seite eine Öffnung aufweist;
* einem Verschlußkörper (VK), der diese Öffnung des Hohlkörpers verschließt, und der eine Ausblicksöffnung (AB) für die Kamera aufweist; und mit
* Mitteln zum Ausblasen von Druckluft durch die Ausblicköffnung (AB);
dadurch gekennzeichnet,
* daß der Verschlußkörper (VK) Hohlräume (H) aufweist, und
* daß die Hohlräume (H) des Verschlußkörpers (VK) jeweils mit mindestens zwei Kühlmittelkammern (K) des Hohlkörpers (HK) derart in Verbindung stehen, daß der Kühlmittelfluß zwischen den Kammern (K) zwangsweise über die Hohlräume (H) erfolgt.

2. Sondengehäuse nach Anspruch 1,
**dadurch gekennzeichnet,** daß der Hohlkörper (HK) doppelwandig und zylinderförmig ausgestaltet ist und daß die Kammern (K) durch in Längsrichtung des Hohlkörpers (HK) verlaufende Trennwände (T1, T2) zwischen innerer und äußerer Wand gebildet werden.

3. Sondengehäuse nach Anspruch 1 und 2,
**dadurch gekennzeichnet**, daß der Verschlußkörper (VK) aus einer Bodenplatte (BP), einer Deckplatte (DP) und zwischen diesen liegenden Stegen (S) besteht.

4. Sondengehäuse nach Anspruch 2,
**dadurch gekennzeichnet,** daß mindestens eine Trennwand (T2) eine zu den anderen Trennwänden (T1) vergleichweise kürzere Länge aufweist, so daß das vom Verschlußkörper (VK) zurückfließende Kühlmittel über die nachfolgende Kammer (K) erneut dem Verschlußkörper (VK) zugeführt wird.

5. Sondengehäuse nach Anspruch 3, **dadurch gekennzeichnet**, daß die Stege (S) so angeordnet sind, daß das durch eine Kammer (K) zum Verschlußkörper (VK) fließende Kühlmittel mittels dieser Stege (S) auf mehrere Kühlmittelströme im Verschlußkörper (VK) aufgeteilt ist, welche durch mindestens eine Kammer (K) wieder zurückfließen.

6. Sondengehäuse nach Anspruch 5, **dadurch gekennzeichnet**, daß die Stege (S) geradlinig oder gekrümmt verlaufen.

## Claims

1. Coolable probe housing for the protection of a camera against high temperatures, having
* a hollow body (HK) for holding the camera, the coolant chambers (K) and a connecting nozzle (AS1) for supplying the coolant to one of the chambers, and a connecting nozzle (AS2) for carrying the coolant away from another of the chambers, and which furthermore has an opening on one side;
* a closure body (VK), which closes this opening in the hollow body and which has a viewing opening (AB) for the camera; and having
* means for blowing compressed air out of the viewing opening (AB);
characterised
* in that the closure body (VK) has cavities (H), and
* in that the cavities (H) in the closure body (VK) are in each case connected to at least two coolant chambers (K) in the hollow body (HK) in such a manner that the coolant flow between the chambers (K) necessarily takes place via the cavities (H).

2. Probe housing according to Claim 1, characterised in that the hollow body (HK) is designed with double walls and a cylindrical shape, and in that the chambers (K) are formed by separating walls (T1, T2), which run in the longitudinal direction of the hollow body (HK), between the inner and outer wall.

3. Probe housing according to Claim [sic] 1 and 2, characterised in that the closure body (VK) consists of a baseplate (BP), a covering plate (DP) and webs (S) located between them.

4. Probe housing according to Claim 2, characterised in that at least one separating wall (T2) has a length which is shorter in comparison with the other separating walls (T1), so that the coolant flowing back from the closure body (VK) is once again supplied to the closure body (VK) via the subsequent chamber (K).

5. Probe housing according to Claim 3, characterised in that the webs (S) are arranged such that the coolant flowing through a chamber (K) to the closure body (VK) is divided by means of these webs (S) into a plurality of coolant flows in the closure body (VK), which flow back again through at least one chamber (K).

6. Probe housing according to Claim 5, characterised in that the webs (S) run in a straight line or in a curved manner.

## Revendications

1. Boîtier de sonde pouvant être refroidi, destiné à protéger une caméra vis-à-vis de températures élevées, comportant
* un corps creux (HK) destiné à loger la caméra et qui comporte des chambres (K) pour un fluide de refroidissement et une tubulure de raccordement (AS1) servant à conduire le fluide de refroidissement à l'une des chambres, et une tubulure de raccordement (AS2) pour évacuer le fluide de refroidissement à partir d'une autre des chambres, et qui comporte en outre une ouverture, d'un côté;
* un élément de fermeture (VK), qui ferme cette ouverture du corps creux et possède une ouverture d'observation (AB) pour la caméra; et
* des moyens pour éjecter par soufflage l'air comprimé par l'ouverture d'observation (AB);
caractérisé en ce
* que l'élément de fermeture (VK) possède des cavités (H), et
* que les cavités (H) de l'élément de fermeture (VK) sont reliées chacune à au moins deux chambres (K) pour le fluide de refroidissement du corps creux (HK) de sorte que la circulation du fluide de refroidissement entre les chambres (K) passe nécessairement par les cavités (H).

2. Boîtier de sonde selon la revendication 1, caractérisé en ce que le corps creux (HK) est réalisé avec une forme cylindrique à paroi double et que les chambres (K) sont formées par des parois de séparation (T1,T2) qui s'étendent dans la direction longitudinale du corps tubulaire (HK) et sont situées entre la paroi intérieure et la paroi extérieure.

3. Boîtier de sonde selon les revendications 1 et 2, caractérisé en ce que l'élément de fermeture (VK) est constitué par une plaque de fond (BP), une plaque de couverture (DP) et des barrettes (S) disposées entre ces plaques.

4. Boîtier de sonde selon la revendication 2, caractérisé en ce qu'au moins une paroi de séparation (T2) possède une longueur comparativement inférieure à celle des autres parois de séparation (T1) de sorte que le fluide de refroidissement, qui reflue à partir de l'élément de fermeture (VK), est envoyé de nouveau à l'élément de fermeture (VK) par l'intermédiaire de la chambre aval (K).

5. Boîtier de sonde selon la revendication 3, caractérisé en ce que les barrettes (S) sont disposées de telle sorte que le fluide de refroidissement, qui traverse une chambre (K) en direction de l'élément de fermeture (VK), est divisé par ces barrettes (S) en plusieurs écoulements à l'intérieur de l'élément de fermeture (VK), écoulements qui refluent de nouveau à travers au moins une chambre (K).

6. Boîtier de sonde selon la revendication 5, caractérisé en ce que les barrettes (S) ont une forme rectiligne ou cintrée.
